# EUROPÄISCHE PATENTSCHRIFT

(11) **EP 2 521 843 B1**
(45) Veröffentlichungstag und Bekanntmachung des Hinweises auf die Patenterteilung: **02.03.2016**
(21) Anmeldenummer: 10787336.6
(22) Anmeldetag: 22.11.2010
(51) Int. Cl.: F01N 3/20, F01N 3/36

(54) **VERFAHREN ZUM BETRIEB EINER FÖRDERVORRICHTUNG FÜR EIN REDUKTIONSMITTEL**
METHOD FOR OPERATING A CONVEYANCE DEVICE FOR A REDUCING AGENT
PROCÉDÉ PERMETTANT DE FAIRE FONCTIONNER UN DISPOSITIF DE TRANSPORT POUR UN AGENT RÉDUCTEUR

(30) Priorität: 08.01.2010 DE 102010004201
(43) Veröffentlichungstag der Anmeldung: 14.11.2012
(73) Patentinhaber: Continental Automotive GmbH, 30165 Hannover (DE)
(72) Erfinder: HODGSON, Jan, 53840 Troisdorf (DE); BAUER, Peter, 95505 Immenreuth (DE)
(86) Internationale Anmeldenummer: PCT/EP2010/067873
(87) Internationale Veröffentlichungsnummer: WO 2011/082878

(56) Entgegenhaltungen:
- WO-A1-2005/045209
- DE-A1- 19 947 197

## Beschreibung

Die Erfindung betrifft ein Verfahren zum Betrieb einer Fördervorrichtung für ein Reduktionsmittel. Insbesondere betrifft die Erfindung ein Verfahren zum Betrieb einer Fördervorrichtung für ein flüssiges Reduktionsmittel, welches bei tiefen Umgebungstemperaturen einfrieren kann.

Das Abgas von Verbrennungskraftmaschinen weist regelmäßig Stoffe auf, deren Emission in die Umwelt unerwünscht ist. Beispielsweise dürfen in vielen Ländern Stickoxidverbindungen (NOₓ) nur bis zu einem gewissen Grenzwert im Abgas von Verbrennungskraftmaschinen enthalten sein. Neben innermotorischen Maßnahmen, mit denen durch die Wahl eines geeigneten Betriebspunktes der Verbrennungskraftmaschine die Emission von Stickstoffoxidverbindungen vermindert werden kann, haben sich Abgas-Nachbehandlungsmethoden etabliert, mit denen eine weitere Absenkung der Stickoxidemissionen möglich ist.

Eine Möglichkeit, die Stickoxidemissionen weiter zu reduzieren, ist die sogenannte selektive katalytische Reduktion (SCR: "selective catalytic reduction"). Hierbei erfolgt eine selektive Reduktion der Stickoxide zu molekularem Stickstoff (N₂) unter Einsatz eines Reduktionsmittels. Ein mögliches Reduktionsmittel ist Ammoniak (NH₃). Ammoniak wird dabei oft nicht in Form von Ammoniak gelagert, vielmehr wird ein Ammoniak-Vorläufer bevorratet, der im Bedarfsfall in Ammoniak umgesetzt wird. Man spricht von einem Reduktionsmittelvorläufer. Ein geeigneter Reduktionsmittelvorläufer, der in Kraftfahrzeugen eingesetzt wird, ist Harnstoff ((NH₂)₂CO). Bevorzugt wird Harnstoff in Form einer Harnstoff-Wasser-Lösung bevorratet. Harnstoff und insbesondere Harnstoff-Wasser-Lösung ist gesundheitlich unbedenklich, einfach zu verteilen, zu lagern und zu dosieren. Unter dem Handelsnamen AdBlue® wird eine solche Harnstoff-Wasser-Lösung mit einem Harnstoffgehalt von 32,5 % vertrieben.

Eine Harnstoff-Wasser-Lösung wird für gewöhnlich in einem Tanksystem im Kraftfahrzeug mitgeführt und mit einem Einspritzsystem mit Pumpe und Injektor in das Abgassystem portioniert zudosiert.

Für die genau portionierte Zudosierung von Reduktionsmittel in das Abgassystem ist es regelmäßig erforderlich, dass am Injektor reines Reduktionsmittel vorliegt. Durch unterschiedliche Betriebsbedingungen kann es passieren, dass in einer Fördervorrichtung für Reduktionsmittel Luftblasen auftreten. Wenn diese Luftblasen zum Injektor gelangen, führen sie zu einer Ungenauigkeit der zudosierten Reduktionsmittelmenge.

In der DE 199 47 197 A1 ist eine Vorrichtung zur Dosierung eines Reduktionsmittels von einem Tank zur Abgasbehandlung offenbart. Die Vorrichtung umfasst eine Pumpe zur Förderung des Reduktionsmittels und eine Leitung zum Verbinden des Tanks mit einem Einspritzventil. Der Reduktionsmittelleitung ist ein Drucksensor zugeordnet, mit dem der Druck in der Leitung gemessen werden kann. Diese Vorrichtung ist für ein Steuerverfahren eingerichtet, bei dem ein Druck in der Reduktionsmittelleitung gemessen und mit einem vorgegebenen Referenzdruck verglichen wird. In Abhängigkeit von diesem Vergleich wird entschieden, ob die Reduktionsmittelleitung belüftet werden soll. Ein solcher Regelkreis ist störanfällig gegenüber Materialermüdung und Time-Shift-Effekten. Zum Ausgleich solcher Störungen muss die Regelung komplex gestaltet sein.

In der WO 2005/045 209 A1 wird eine Vorrichtung zum Einbringen eines Reduktionsmittels in eine Abgasanlage einer Brennkraftmaschine mit Katalysator beschrieben. Die Vorrichtung umfasst einen Vorratsbehälter für eine Harnstoff-Wasser-Lösung, eine Fördereinrichtung zur Förderung der Lösung sowie eine Leitung, über die das Reduktionsmittel von dem Vorratsbehälter zum Abgas gefördert werden kann. Die Vorrichtung ist mit einer selbsttätigen Entlüftungseinrichtung versehen, die als Magnetventil ausgestaltet ist und von einem Steuergerät geöffnet bzw. geschlossen werden kann. Die Vorrichtung benötigt einen Drucksensor oder ein ähnliches Messmittel, weil ansonsten die selbsttätige Entlüftungsvorrichtung kein Stellsignal erhält, wonach diese betätigt werden könnte. Ein solches System ist jedoch - wie im Bezug auf die DE 199 47 197 A1 beschrieben - anfällig für Störungen.

Hiervon ausgehend ist es Aufgabe der hier vorliegenden Erfindung, die im Zusammenhang mit dem Stand der Technik geschilderten technischen Probleme zumindest zu lindern. Es soll insbesondere ein Verfahren offenbart werden, mit welchem eine Fördervorrichtung so betrieben werden kann, dass keine oder nur eine reduzierte Menge Luftblasen in der Fördervorrichtung vorliegen. Zudem soll das Verfahren einfach und ohne großen technischen Messaufwand durchführbar sein. Des Weiteren soll eine besonders vorteilhafte Fördervorrichtung vorgestellt werden.

Diese Aufgaben werden gelöst mit einem Verfahren gemäß dem Patentanspruch 1 und einer Fördervorrichtung gemäß dem Patentanspruch 10. Weitere vorteilhafte Ausgestaltungen des Verfahrens sind in den abhängig formulierten Patentansprüchen angegeben. Die in den Patentansprüchen einzeln aufgeführten Merkmale sind in beliebiger technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Das erfindungsgemäße Verfahren ist ein Verfahren zum Betrieb einer Fördervorrichtung zur Förderung eines Reduktionsmittels aus einem Reduktionsmitteltank in eine Abgasbehandhungsvorrichtung einer Verbrennungskraftmaschine eines Kraftfahrzeuges, wobei während des Betriebes der Verbrennungskraftmaschine zumindest zeitweise ein Entlüftungsvorgang der Fördervorrichtung erfolgt, bei dem zumindest die folgenden Schritte ausgeführt werden:
a) Registrieren eines Entlüftungsvorganges;
b) Aktivieren einer Zeitsteuerung mit einem voreingestellten Zeitintervall und/oder Aktivieren eines Massenstromaddierers mit einem voreingestellten Gesamtmassenstrom;
c) Abwarten des voreingestellten Zeitintervalls und/oder Warten bis der voreingestellte Gesamtmassenstrom erreicht ist; und
d) Durchführen eines Entlüftungsvorganges.

Die erfindungsgemäßen Schritte a) bis d) erfolgen in einer bevorzugten Ausführungsvariante des erfindungsgemäßen Verfahrens regelmäßig wiederholt in Form einer Schleife. Dabei wird ein gemäß Schritt d) ausgeführter Entlüftungsvorgang in einem erneuten Schritt a) registriert und so beginnen die Schritte a) bis d) des erfindungsgemäßen Verfahrens von vorne.

Der im Rahmen dieser Beschreibung häufig verwendete Begriff Reduktionsmittel umfasst sowohl ein Reduktionsmittel, als auch eine Reduktionsmittellösung, einen Reduktionsmittelvorläufer (insbesondere Harnstoff) oder eine Reduktionsmittelvorläuferlösung (insbesondere AdBlue^{®}).

Dem erfindungsgemäßen Verfahren liegt die Idee zugrunde, dass keine explizite Bestimmung erfolgt, ob in einer Fördervorrichtung eine Luftblase vorliegt. Eine Entlüftungsprozedur wird unabhängig von in der Fördervorrichtung gemessenen Parametern und insbesondere unabhängig von einer in der Fördervorrichtung vorgenommenen Druckmessung wiederholt durchgeführt, um zu vermeiden, dass sich größere Mengen von Luftblasen in der Fördervorrichtung ansammeln. Es hat sich herausgestellt, dass verschiedene Verfahren zur Bestimmung von Luftblasen in einer Fördervorrichtung trotz hohem sensorischem und technischem Aufwand häufig mit Fehlern behaftet sind, so dass es zur sicheren Vermeidung von Luftblasen in der Fördervorrichtung effektiver ist, einen Entlüftungsvorgang der Fördervorrichtung unabhängig von solchen Daten einzuleiten.

Mit dem erfindungsgemäßen Verfahren können nicht nur Luftblasen, sondern auch Gasblasen anderer Art aus der Fördervorrichtung hinaus gefördert werden. Insbesondere Blasen aus gasförmig gewordenem Reduktionsmittel werden mit dem erfindungsgemäßen Verfahren wirkungsvoll aus der Fördervorrichtung hinaus gefördert. Gasblasen aus Reduktionsmittel können beispielsweise durch hohe Temperaturen oder durch besonders niedrige Drücke in der Fördervorrichtung entstehen. Besonders niedrige Drücke können beispielsweise aufgrund der Saugwirkung einer Pumpe in der Fördervorrichtung auftreten.

Das erfindungsgemäße Verfahren beschreibt zwei Vorgehensweisen zur Festlegung des Zeitpunktes für einen Entlüftungsvorgang (Schritt d)). Bei der einen Variante wird in Schritt b) eine Zeitsteuerung mit einem vorgestellten Zeitintervall aktiviert und in Schritt c) abgewartet, bis das voreingestellte Zeitintervall abgelaufen ist. Bei Anwendung dieser Variante des erfindungsgemäßen Verfahrens kann zwischen dem in Schritt a) registrierten Entlüftungsvorgang und dem in Schritt d) durchgeführten erneuten Entlüftungsvorgang kein Zeitintervall vorliegen, welches das voreingestellte Zeitintervall überschreitet. Das voreingestellte Zeitintervall ist so gewählt, dass sicher vermieden ist, dass in diesem Zeitintervall Luftblasen in einem signifikanten Ausmaß in die Fördervorrichtung gelangen und/ oder in der Fördervorrichtung entstehen. Bevorzugt ist das Zeitintervall so gewählt, dass zu einer Wahrscheinlichkeit von 90 %, insbesondere von 95 % und besonders bevorzugt von 98 %, innerhalb des Zeitintervalls keine Luftblasen in der Fördervorrichtung entstehen bzw. das Gesamtvolumen an Luftblasen in der Fördervorrichtung weniger als 10 %, insbesondere weniger als 5 % und besonders bevorzugt weniger als 2 % des gesamten regulär mit Reduktionsmittel befüllbaren Volumens der Fördervorrichtung ausmacht. Um eine Wahrscheinlichkeit von 95 % oder sogar 98 % zu erreichen, ist bevorzugt, dass das erfindungsgemäße Verfahren, basierend auf Zeitsteuerung oder Massenstromaddierer, mit weiteren Maßnahmen, wie der Aktivierung des Entlüftungsvorganges beim Auftreten bestimmter Ereignisse, kombiniert wird.

Je nach Art des Kraftfahrzeuges und/oder der Verbrennungskraftmaschine können die voreingestellten Zeitintervalle, die zur Einhaltung dieser Wahrscheinlichkeiten notwendig sind, unterschiedlich vorgegeben sein. Beispielsweise sollte für ein Kraftfahrzeug, welches im Betrieb regelmäßig sehr heftigen Bewegungen unterworfen ist (beispielsweise ein im Gelände eingesetztes Baufahrzeug), ein wesentlich kürzeres Zeitintervall gewählt werden, um die angegebenen Wahrscheinlichkeiten zu erreichen als für ein Kraftfahrzeug, das zu überwiegendem Anteil auf befestigten Straßen verkehrt.

Als anderes Konzept zum Erreichen einer ausreichenden Entlüftung einer Fördervorrichtung für ein Reduktionsmittel schlägt die hier behandelte Erfindung vor, anstatt (oder zusätzlich zu) einer Zeitsteuerung einen Massenstromaddierer mit einem voreingestellten Gesamtmassenstrom zu aktivieren. In Schritt d) wird dann abgewartet, bis der voreingestellte Gesamtmassenstrom erreicht ist. Hier liegt die Idee zugrunde, dass nach der Förderung eines bestimmten Massenstromes durch die Fördervorrichtung mit hoher Wahrscheinlichkeit Luftblasen in der Fördervorrichtung auftreten können. Der von der Fördervorrichtung geförderte Massenstrom wird beispielsweise über eine Differenzmessung zwischen dem Füllstand bei Schritt a) und dem vorliegenden Füllstandes in Schritt c) und/oder durch eine Aufsummierung der der Abgasbehandlungsvorrichtung zugeführten Reduktionsmittelmenge bestimmt. Derartige Überwachungen des Reduktionsmittel-Massenstroms erfolgen bereits regelmäßig, um den Füllstand des Reduktionsmitteltankes zu ermitteln und/oder um die dem Abgassystem zugeführte Reduktionsmittelmenge zu überwachen. Eine parallele Nutzung dieser Informationen über den Massenstrom zur Bestimmung geeigneter Zeitpunkte für die Entlüftung der Fördervorrichtung bedeutet keinen großen zusätzlichen apparativen und/oder regelungstechnischen Aufwand. Ein Massenstromaddierer kann die insgesamt von der Fördervorrichtung geförderten Massenströme addieren. So kann überwacht werden, wann der voreingestellte Gesamtmassenstrom erreicht wird, um anschließend einen Entlüftungsvorgang durchzuführen. Genauso wie bei der beschriebenen Zeitsteuerung ist es auch bei der Steuerung über den Massenstrom möglich, den Gesamtmassenstrom so zu bestimmen, dass das Auftreten einer bestimmten Menge von Luftblasen in einer Fördervorrichtung mit einer bestimmten Wahrscheinlichkeit nicht auftritt. Auch der Gesamtmassenstrom sollte folglich in Abhängigkeit von Kraftfahrzeug, Verbrennungskraftmaschine und/oder Einsatzgebiet des Kraftfahrzeuges gewählt werden.

Besonders vorteilhaft ist es, wenn sowohl die beschriebene Zeitsteuerung als auch die beschriebene Überwachung mit Hilfe eines Massestromaddierers parallel erfolgen. Auf diese Art können besonders sicher Luftblasen in der Fördervorrichtung vermieden werden. Je nachdem, ob zuerst der Gesamtmassenstrom oder das voreingestellte Zeitintervall erreicht ist, erfolgt dann die Auslösung eines Entlüftungsvorganges in Schritt d).

Weiterhin erfindungsgemäß ist ein Verfahren, bei dem zumindest ein zusätzlicher Entlüftungsvorgang durchgeführt wird, wenn zumindest eines der folgenden Ereignisse auftritt:
- Auftreten eines vorbestimmten Fahrzustands des Kraftfahrzeuges;
- Auftreten eines vorbestimmten Füllstandes und/oder einer vorbestimmten Füllstandsänderung im Reduktionsmitteltank;
- Erstinbetriebnahme der Fördervorrichtung;
- Beginn des Betriebs der Verbrennungskraftmaschine;
- Wechsel eines Filters oder einer sonstigen Komponente der Fördervorrichtung; und
- Auftauen von eingefrorenem Reduktionsmittel im Reduktionsmitteltank und/ oder in der Fördervorrichtung.

All diesen besonderen Ereignissen, die im Betrieb eines Kraftfahrzeuges auftreten können, ist gemein, dass sie mit einem erhöhten Risiko für das Auftreten von Luftblasen oder Gasblasen in der Fördervorrichtung einhergehen.

Als vorbestimmter Fahrzustand, der mit einem erhöhten Risiko für das Auftreten von Luftblasen in der Fördervorrichtung einhergeht, ist beispielsweise eine definierte Schrägfahrt des Kraftfahrzeuges umfasst. Reduktionsmittel wird normalerweise mit Hilfe eines Entnahmerohres aus einem Reduktionsmitteltank entnommen. Bei Schrägfahrten eines Kraftfahrzeuges kann es passieren, dass der Füllstand an Reduktionsmittel im Reduktionsmitteltank schräg verläuft und so die Saugseite des Entnahmerohres aus dem Reduktionsmittel austaucht und die Fördervorrichtung Luft ansaugt.

Ein Beispiel für einen vorbestimmten Füllstand, bei dem ein Entlüftungsvorgang eingeleitet werden kann, ist insbesondere ein vorgegebener niedriger Füllstand im Tank. Das Ansaugen von Luft kann gerade dann besonders leicht passieren, weil das Entnahmerohr dann gegebenenfalls aus dem Reduktionsmittel auftaucht. Auch die Kombination von vorbestimmten Füllständen und besonderen vorbestimmten Fahrzuständen ist als auslösendes Ereignis für Entlüftungsvorgänge sinnvoll. Beispielsweise sind Schrägfahrten (ggf. mit einem reduzierten Neigungswinkel) insbesondere bei niedrigem Füllstand problematisch, weil das Entnahmerohr hier mit besonders hoher Wahrscheinlichkeit aus dem Reduktionsmittel auftaucht.

Die Berücksichtigung von vorbestimmten Füllstandsänderungen zur Auslösung von Entlüftungsvorgängen kann beispielsweise sinnvoll sein, wenn Füllstandsänderungen im Reduktionsmitteltank auf einen Betankungsvorgang hinweisen. Es ist zudem vorteilhaft, nach einem Betankungsvorgang grundsätzlich einen Entlüftungsvorgang einzuleiten, um sicher mit einer vollständig entlüfteten Fördervorrichtung den Betrieb zu starten. Auch können Füllstandsänderungen auf Schwappbewegungen im Reduktionsmitteltank hindeuten, so dass diese als indirekter Hinweis auf besondere Fahrzustände gewertet werden können, die die Einleitung eines Entlüftungsvorganges rechtfertigen.

Bei Erstinbetriebnahme der Fördervorrichtung ist es vorteilhaft, zunächst eine Entlüftung durchzuführen, um direkt eine sichere Bereitstellung von Reduktionsmittel zu gewährleisten. Genauso verbessert auch die Durchführung eines Entlüftungsvorganges bei jedem Beginn des Betriebes einer Verbrennungskraftmaschine die Sicherheit, dass die Fördervorrichtung Reduktionsmittel bereitstellt. Die Durchführung eines Entlüftungsvorganges kann auch nur bei vorbestimmten Inbetriebnahmen der Verbrennungskraftmaschine erfolgen. Beispielsweise kann die Durchführung des Entlüftungsvorganges nur bei höchstens jeder fünften, vorzugsweise höchstens bei jeder fünfzigsten und besonders bevorzugt höchstens bei jeder hundertsten Inbetriebnahme erfolgen. Möglich ist auch, dass bei der Inbetriebnahme der Verbrennungskraftmaschine entschieden wird, ob ein Entlüftungsvorgang ausgeführt werden soll, in dem ausgewertet wird, wie lange (über welchen Zeitraum) die Verbrennungskraftmaschine zuvor nicht betrieben wurde. Beispielsweise kann überprüft werden, ob die Verbrennungskraftmaschine zuvor mehr als einer Stunde, mehr als einen Tag oder sogar mehr als 10 Tage nicht betrieben wurde, um dann gegebenenfalls einen Entlüftungsvorgang durchzuführen.

Nach dem Wechsel eines Filters und/oder einer sonstigen Komponente der Fördervorrichtung kann es ebenfalls sinnvoll sein, einen Entlüftungsvorgang durchzuführen. Beim Wechsel des Filters und/oder einer sonstigen Komponente der Fördervorrichtung muss die Fördervorrichtung regelmäßig geöffnet werden. So können Luftblasen besonders leicht in die Fördervorrichtung eindringen.

Darüber hinaus hat sich herausgestellt, dass bei Auftauen von eingefrorenem Reduktionsmittel im Reduktionsmitteltank und/oder in der Fördervorrichtung Luftblasen oder Gasblasen entstehen können. Somit ist es auch vorteilhaft nach dem Auftreten derartiger Ereignisse, eine Entlüftung der Fördervorrichtung durchzuführen.

Ergänzend sei hier noch angemerkt, dass die "vorbestimmten" Ereignisse regelmäßig als Grenzwerte, Toleranzbereiche oder dergleichen in einer Kontrolleinheit abgelegt (z. B. gespeichert), nach aktuellen Parametern berechnet und/oder durch Aktionen des Bedieners (z. B. dem Kraftfahrer) bestimmt sind.

Weiterhin ist das erfindungsgemäße Verfahren vorteilhaft, wenn die Fördervorrichtung eine vom Reduktionsmitteltank zur Abgasbehandlungsvorrichtung verlaufende Förderleitung und eine von der Förderleitung abzweigende und in den Reduktionsmitteltank einmündende Rücklaufleitung aufweist, wobei während des Entlüftungsvorgangs der Fördervorrichtung eine Kreisförderung von Reduktionsmittel durch die Förderleitung und die Rücklaufleitung erfolgt.

Durch eine derartige Kreisförderung kann eine Förderung der Luftblasen in der Fördervorrichtung durch die Rücklaufleitung zurück in den Reduktionsmitteltank erfolgen. Es ist bei einer derartigen Kreisförderung nicht entscheidend, wie groß die tatsächlich im Kreis geförderte Menge an Reduktionsmittel ist, weil das Reduktionsmittel bei der Kreisförderung zurück in den Reduktionsmitteltank gelangt und somit nicht verloren geht. Vorteilhaft ist allerdings, die bei der Kreisförderung bei dem Entlüftungsvorgang im Kreis geförderte Menge von Reduktionsmittel so einzustellen, dass die Luftblasen in der Fördervorrichtung sicher zurück in den Reduktionsmitteltank gefördert werden und gleichzeitig die im Kreis gefördert Menge klein ist. So kann einerseits die Dauer des Entlüftungsvorganges kurz gehalten werden und andererseits die für die Kreisförderung benötigte Energiemenge klein gehalten werden. Beispielsweise kann die im Kreis geförderte Menge das 2-fache, vorzugsweise das 1,5-fache und besonders bevorzugt das 1,1-flache, des regulär mit Reduktionsmittel gefühlten Gesamtvolumens der Fördervorrichtung ausmachen.

Besonders bevorzugt ist, dass unterschieden wird zwischen einem ersten Entlüftungsvorgang, der beispielsweise nach einer Erstbefüllung und/oder einem Filterwechsel ausgeführt wird, und einem zweiten Entlüftungsvorgang, der in weiteren vorgegebenen Situationen durchgeführt wird. Beim ersten Entlüftungsvorgang sollte die im Kreis geförderte Menge zumindest das doppelte Volumen der Leitungen und/oder des Filters der Fördervorrichtung zusammen betragen. Beim zweiten Entlüftungsvorgang kann die im Kreis geförderte Menge geringer sein. Beispielsweise kann die im Kreis geförderte Menge hier weniger als das doppelte Volumen der Leitungen und/oder das einfache Volumen des Filters der Fördervorrichtung zusammen betragen. Bevorzugt ist, dass beim zweiten Entlüftungsvolumen die geförderte Menge dem doppelten Volumen der Leitungen und dem halben Volumen des Filters zusammen entspricht. Hintergrund der Unterscheidung zwischen erstem Entlüftungsvorgang und zweitem Entlüftungsvorgang ist, dass die Fördervorrichtung bei der Durchführung des ersten Entlüftungsvorganges voraussichtlich zu einem größeren Anteil mit Luft gefüllt ist, während beim zweiten Entlüftungsvorgang von einer erheblichen Restmenge an Reduktionsmittel in der Fördervorrichtung ausgegangen werden kann.

Für diese im Kreis geförderte Menge ist es nicht entscheidend, ob sie aus Luftblasen oder aus Reduktionsmittel besteht. Entscheidend ist vielmehr das Volumen der im Kreis geförderten Menge.

Weiter wird vorgeschlagen, dass das Zeitintervall und/oder der Gesamtmassenstrom in Abhängigkeit von zumindest einem der folgenden Parameter variiert wird:
- Füllstand im Reduktionsmitteltank;
- Temperatur des Reduktionsmittels;
- Massenstrom an Reduktionsmittel, welcher der Abgasbehandlungsvorrichtung zugeführt wird;
- Geschwindigkeit des Kraftfahrzeuges;
- Drehzahl der Verbrennungskraftmaschine des Kraftfahrzeuges; und
- Außentemperatur.

Besonders vorteilhaft ist es, das Zeitintervall und/oder den Gesamtmassenstrom in Abhängigkeit des Füllstandes im Reduktionsmitteltank festzulegen. Bei hohen Füllständen ist die Wahrscheinlichkeit für das Eintreten einer Luftblase in die Fördervorrichtung klein, so dass große Zeitintervalle und/oder große Gesamtmassenströme angesetzt werden können. Bei niedrigen Füllständen ist die Wahrscheinlichkeit für das Eintreten einer Luftblase in die Fördervorrichtung erhöht, so dass kleinere Zeitintervalle und kleinere Gesamtmassenströme sinnvoll sind.

Es hat sich herausgestellt, dass die Wahrscheinlichkeit des Auftretens von Luftblasen in der Fördervorrichtung bei erhöhter Temperatur des Reduktionsmittels besonders groß ist. Aus diesem Grund kann es sinnvoll sein, das Zeitintervall und/oder den Gesamtmassenstrom gegenläufig zur Temperatur des Reduktionsmittels festzulegen. Bei besonders hohen Temperaturen werden dann besonders kleine Zeitintervalle bzw. besonders kleine Gesamtmassenströme eingestellt. Bei niedrigen Temperaturen des Reduktionsmittels werden große Zeitintervalle bzw. große Gesamtmassenströme eingestellt. Komplexere Zusammenhänge zwischen der Temperatur des Reduktionsmittels und dem voreingestellten Zeitintervall bzw. voreingestellten Gesamtmassenstroms sind auch vorstellbar.

Das voreingestellte Zeitintervall und/oder der voreingestellte Gesamtmassenstrom kann auch in Abhängigkeit des Massenstroms pro Zeiteinheit an Reduktionsmittel, welcher der Abgasbehandlungseinheit zugeführt wird, der Geschwindigkeit des Kraftfahrzeuges und/oder der Drehzahl der Verbrennungskraftmaschine eingestellt sein. Diesen Einflussgrößen ist z. B. gemein, dass große Massenströme pro Zeiteinheit an Reduktionsmittel, hohe Geschwindigkeit des Kraftfahrzeuges und hohe Drehzahlen der Verbrennungskraftmaschine regelmäßig Rückschlüsse auf große bzw. intensive Bewegungen des Kraftfahrzeuges zulassen. Aus diesem Grunde kann es vorteilhaft sein, die Zeitintervalle und/oder den Gesamtmassenstrom regelmäßig ebenfalls antiproportional zu diesen Parametern zu bestimmen.

Anders ist bei der Außentemperatur als Parametern vorzugehen. Insbesondere bei niedrigen Außentemperaturen ist die Wahrscheinlichkeit des Einfrierens des Reduktionsmittels im Reduktionsmitteltank und/oder in der Fördervorrichtung deutlich erhöht. Wie bereits ausgeführt, können insbesondere beim Auftauen von eingefrorenem Reduktionsmittel sehr leicht Luftblasen oder Gasblasen in der Fördervorrichtung entstehen. Deshalb sollten das voreingestellte Zeitintervall und/oder der voreingestellte Gesamtmassenstrom, insbesondere im Bereich niedriger Außentemperaturen, (proportional) gleichsinnig zu den Außentemperaturen geregelt sein, so dass bei besonders niedrigen Außentemperaturen auch besonders kurze Zeitintervalle bzw. besonders kleine Gesamtmassenströme vorliegen, während bei hohen Außentemperaturen größere Zeitintervalle und/oder größere Gesamtmassenströme vorliegen. Bei besonders stark erhöhten Außentemperaturen besteht wiederum die Gefahr der Verdunstung und/oder Verdampfung von Reduktionsmittel. Deshalb kann es hier sinnvoll sein, kleinere Zeitintervalle bzw. Gesamtmassenströme vorzusehen.

Weiterhin vorteilhaft ist das erfindungsgemäße Verfahren, wenn zu einem Zeitintervall lediglich Phasen des Betriebes der Verbrennungskraftmaschine gezählt werden. Hiermit ist gemeint, dass die Zeitsteuerung, welche in Schritt b) aktiviert wird, keine Zeiträume betrachtet, in denen das Kraftfahrzeug stillsteht. Eine derartige Steuerung ist bei Durchführung des erfindungsgemäßen Verfahrens mit Hilfe eines Massenstromaddierers und eines Gesamtmassenstromes nicht erforderlich, weil während des Stillstandes des Kraftfahrzeuges regelmäßig kein Reduktionsmittel mit der Fördervorrichtung gefördert wird und somit Intervalle des Stillstandes der Verbrennungskraftmaschine hier ohnehin nicht mitgezählt werden.

Weiterhin vorteilhaft ist das erfindungsgemäße Verfahren, wenn ein Zeitintervall zumindest 5 Minuten und maximal 5 Stunden, vorzugsweise zumindest 10 Minuten und maximal 2 Stunden und besonders bevorzugt zumindest 10 Minuten und maximal 1 Stunde beträgt.

Auch weiterhin vorteilhaft ist das erfindungsgemäße Verfahren, wenn ein Gesamtmassenstrom zumindest 100 ml [Milliliter] und maximal 5 l [Liter], vorzugsweise zumindest 200 ml [Milliliter] und maximal 2 l [Liter] und besonders bevorzugt zumindest 200 ml [milliliter und maximal 1 l [Liter] beträgt.

Es hat sich herausgestellt, dass bei einer derartigen Wahl der voreingestellten Zeitintervalle und der voreingestellten Gesamtmassenströme zum einen die Häufigkeit der Entlüftungsvorgänge noch vertretbar ist und außerdem mit ausreichender Wahrscheinlichkeit sichergestellt werden kann, dass keine Luftblasen in der Fördervorrichtung vorliegen.

Weiterhin vorteilhaft ist das erfindungsgemäße Verfahren, wenn die Abgasbehandlungsvorrichtung eine Speicherkapazität für Reduktionsmittel aufweist und vor dem Entlüftungsvorgang eine erhöhte Menge an Reduktionsmittel gefördert wird, um die Speicherkapazität mit Reduktionsmittel zu befüllen. Bei Abgasbehandlungssystemen, die für die selektive katalytische Reaktion eingerichtet sind, sind normalerweise so genannte Ammoniak-Speicherkatalysatoren vorgesehen. In diesen Ammoniak-Speicherkatalysatoren kann Ammoniak eingelagert werden. Dieser steht für die selektive katalytische Reduktion in einem SCR-Katalysator zur Verfügung. Ammoniak-Speicherkatalysator und SCR-Katalysator können auch in Form einer gemeinsamen Beschichtung auf einer Trägerstruktur vorliegen. Das zugeführte Reduktionsmittel bzw. die zugeführte Reduktionsmittelvorläuferlösung muss gegebenenfalls zur Einlagerung zunächst in Ammoniak umgesetzt werden. Dazu kann ein Hydrolysekatalysator vorgesehen sein. In jedem Fall sind ausreichende Temperaturen zur hydrolytischen und/oder thermolytischen Umsetzung der Reduktionsmittelvorläuferlösung erforderlich. Die in einem Speicherkatalysator eingelagerte Menge an Ammoniak kann durch eine gezielte Zufuhr von Reduktionsmittel bei ausreichend hohen Temperaturen in der Abgasbehandlungsvorrichtung vor einem Entlüftungsvorgang erhöht werden, so dass ein regulärer Betrieb des SCR-Katalysators auch während der Entlüftung der Fördervorrichtung möglich ist.

Besonders bevorzugt ist, wenn die Temperatur in der Abgasbehandlungsvorrichtung für die Einlagerung von Ammoniak in einem Speicherkatalysator überwacht wird, und die Einlagerung bevorzugt erfolgt, wenn die Temperatur zwischen 150 °C und 650 °C beträgt. So können sowohl Ablagerungen von Reduktionsmittelrückständen in der Abgasbehandlungsvorrichtung als auch ein Schlupf von Ammoniak aus der Abgasbehandlungsvorrichtung heraus in die Umgebung wirksam vermieden werden.

Weiterhin vorteilhaft ist das erfindungsgemäße Verfahren, wenn die Förderung von Reduktionsmittel unterbrochen wird, während ein Entlüftungsvorgang der Fördervorrichtung erfolgt. Während des Entlüftungsvorganges sind die Bedingungen, unter denen Reduktionsmittel am Injektor der Fördervorrichtung zur Zufuhr in das Abgassystem zur Verfügung steht, gegebenenfalls nicht immer prozesssicher kontrollierbar. Deshalb ist es vorteilhaft, während der Entlüftungsvorgänge den Förderbetrieb der Fördervorrichtung zu unterbrechen. Dies ist insbesondere vorteilhaft möglich, wenn die Abgasbehandlungsvorrichtung, an welche die Fördervorrichtung angeschlossen ist, eine Speicherkapazität für Reduktionsmittel aufweist, so dass ein regulärer Betrieb eines SCR-Katalysators sichergestellt sein kann, obwohl durch die Fördervorrichtung keine Förderung von Reduktionsmittel erfolgt.

Erfindungsgemäß wird auch eine Fördervorrichtung für ein Reduktionsmittel aus einem Reduktionsmitteltank in eine Abgasbehandlungsvorrichtung nach dem Patentanspruch 10 vorgeschlagen, die eine Förderleitung, die vom Reduktionsmitteltank zur Abgasbehandlungsvorrichtung verläuft, sowie eine Pumpe zur För-derung des Reduktionsmittels aufweist, wobei innerhalb der Fördervorrichtung kein Drucksensor vorgesehen ist.

Die erfindungsgemäße Fördervorrichtung ist mit Mitteln zur Durchführung des erfindungsgemäßen Verfahrens eingerichtet. Die für das erfindungsgemäße Verfahren geschilderten Vorteile und besonderen Verfahrensmerkmale sind auf die erfindungsgemäße Fördervorrichtung anwendbar und übertragbar. Gleiches gilt für die mit Bezug auf die erfindungsgemäße Fördervorrichtung geschilderten Vorrichtungsmerkmale und Vorteile, die auf das erfindungsgemäße Verfahren anwendbar und übertragbar sind.

Eine derartige Fördervorrichtung weist einen Injektor auf, der zeitgesteuert und/oder massengesteuert geöffnet wird, um der Abgasbehandlungsvorrichtung Reduktionsmittel portioniert zuzudosieren.

Besonders vorteilhaft ist eine derartige Fördervorrichtung, wenn diese keinen (nur) selbstöffnenden Injektor aufweist. Insbesondere sollte dann kein selbstöffnender Injektor vorhanden sein, wenn dieser eine Verbindung hin zu einer Abgasbehandlungskomponente und/oder zu einer Mischkammer freigeben kann. Eine Mischkammer kann beispielsweise ein Raum (ggf. mit Mischer-Einbauten) zur Mischung von Reduktionsmittel mit einer anderen Substanz, beispielsweise Luft, sein. Ein selbstöffnender Injektor öffnet automatisch, wenn an dem selbstöffnenden Injektor bzw. in einer Förderleitung von einer Pumpe zu dem selbstöffnenden Injektor ein bestimmter Druck vorliegt. Ein solcher selbstöffnender Injektor kann beispielsweise ein Ventil aufweisen, welches ab einem bestimmten Druck öffnet und den selbstöffnenden Injektor frei gibt, so dass Reduktionsmittel austritt. Da bei Vorsehung eines selbstöffnenden Injektors praktisch nur Drücke bis zum Öffnungsdruck einstellbar sind und darüber hinaus kaum eine Kontrolle des Zustandes des Reduktionsmittels erreicht werden kann, gerade im Zusammenhang mit dem erfindungsgemäßen Verfahren, werden hier andere Arten von Injektoren bevorzugt.

Insbesondere ist demnach eine Fördervorrichtung bevorzugt, wenn ein steuerbarer Injektor vorgesehen ist. Ein steuerbarer Injektor unterscheidet sich von einem selbstöffnenden Injektor dadurch, dass dieser Ansteuerungsmittel aufweist. Ansteuerungsmittel können beispielsweise durch einen Signaleingang gekennzeichnet sein, an welchen eine externe Signalleitung anschließbar ist und/oder über welchen ein externes Signal in bzw. zu dem Injektor gelangen kann. Durch ein solches externes (elektrisches) Signal öffnet und/oder schließt der ansteuerbare Injektor. Vorzugsweise öffnet und/oder schließt ein solcher steuerbarer Injektor nicht aufgrund eines vorliegenden Drucks. Es ist allerdings nicht ausgeschlossen, dass ein steuerbarer Injektor nicht nur aufgrund eines Signals bzw. durch eine externe Signalleitung ansteuerbar ist, sondern zusätzlich auch durch den in der Förderleitung anliegenden Druck öffnet und sich dann wie ein selbstöffnender Injektor verhält. Beispielsweise kann ein steuerbarer Injektor öffnen, wenn ein (ggf. auch über Stellmittel variabel einstellbarer) Grenzwert des Drucks überschritten wird, der weit oberhalb von üblichen Betriebsdrücken des Injektors liegt, um zu verhindern, dass der Injektor durch ein weiteres Ansteigen des Druckes zerstört wird (ggf. reiner Überlastschutz, der während der üblichen Dosierungsvorgänge nicht genutzt wird). Ein solcher ansteuerbarer Injektor kann z. B. ein magnetisches Ventil aufweisen.
Aufgrund des erfindungsgemäßen Verfahrens ist ein Drucksensor innerhalb der Fördervorrichtung nicht mehr erforderlich. Der Drucksensor wurde in bekannten Fördervorrichtungen für Reduktionsmittel zur Überwachung der tatsächlichen aktuellen Zustände benötigt. Durch das erfindungsgemäße Verfahren wird es möglich, am Injektor Reduktionsmittel mit derart präzise definierten Bedingungen bereitzustellen, dass die Überwachung des Zustandes des Reduktionsmittels mit Hilfe eines Drucksensors nicht mehr erforderlich ist. Der Verzicht auf einen Drucksensor bedeutet einen erheblichen Kostenvorteil für die Fördervorrichtung. Ein Drucksensor beinhaltet zudem regelmäßig empfindliche, bewegliche Komponenten, um den Druck zu bestimmen, welche mit erheblichem Aufwand so ausgelegt werden mussten, dass sie einfrierbeständig sind.

Falls Informationen über den Druck im SCR-Dosiersystem erforderlich sind, obwohl das SCR-Dosiersystem keinen Drucksensor aufweist, kann eine Druckinformation mit Hilfe der SCR-Dosierpumpe gewonnen werden. Der Druck im SCR-Dosiersystem kann näherungsweise über eine Stromkennlinie der Pumpe bestimmt werden. Zur Förderung wird die SCR-Dosierpumpe mit einer Versorgungsspannung angeregt. In Abhängigkeit von dem Druck im SCR-Dosiersystem ergibt sich bei vorgegebener Versorgungsspannung ein charakteristischer Stromfluss. Aus diesem Stromfluss kann der Druck im SCR-Dosiersystem bestimmt bzw. berechnet werden. Eine Kennlinie kann also einen Zusammenhang zwischen Stromfluss und Druck wiedergeben. Wenn die SCR-Dosierpumpe mit unterschiedlichen Versorgungsspannungen arbeitet, ist gegebenenfalls ein Stromkennlinienfeld erforderlich, das den Zusammenhang zwischen Stromfluss und Druck für die verschiedenen Versorgungsspannungen abbildet.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Weiter ist darauf hinzuweisen, dass die Figuren und insbesondere die dargestellten Größenverhältnisse, nur schematisch sind. Es zeigen:
- Fig. 1:: ein Kraftfahrzeug, aufweisend eine erfindungsgemäße Fördervorrichtung;
- Fig. 2:: ein Diagramm des Betriebes des erfindungsgemäßen Verfahrens mit einer Zeitsteuerung;
- Fig. 3:: ein Flussdiagramm des erfindungsgemäßen Verfahrens und
- Fig. 4:: ein Diagramm des Betriebes des erfindungsgemäßen Verfahrens mit einem Massenstromaddierer.

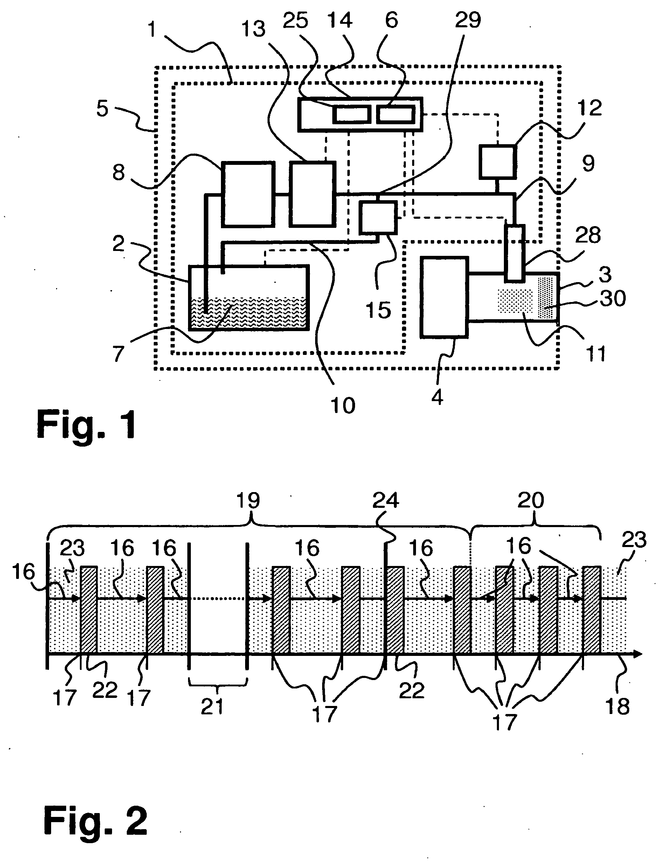

Fig. 1 zeigt ein Kraftfahrzeug 5, aufweisend eine Verbrennungskraftmaschine 4 mit einer Abgasbehandlungsvorrichtung 3, in welche Reduktionsmittel mit einem Injektor 28 und einer Fördervorrichtung 1 portioniert zudosiert werden kann. Der Injektor 28 weist typischerweise ein Ventil auf, durch welches der Injektor 28 geöffnet und geschlossen werden kann sowie eine Düse. Mit dem Begriff "Düse" ist hier insbesondere die Gestaltung des Austrittsbereiches für Reduktionsmittel aus dem Injektor 28 in die Abgasbehandlungsvorrichtung 3 gemeint. Mit der Düse kann erreicht werden, dass das Reduktionsmittel sich nach dem Austritt aus dem Injektor 28 in der Abgasbehandlungsvorrichtung 3 auf eine vorbestimmte Weise verteilt, beispielsweise mit einem definierten Sprühbild. Die Abgasbehandlungsvorrichtung 3 weist eine Speicherkapazität 11 für Ammoniak und einen SCR-Katalysator 30 auf. Die Fördervorrichtung 1 fördert Reduktionsmittel aus einem Reduktionsmitteltank 2 durch eine Förderleitung 9 zum Injektor 28. Entlang der Förderleitung 9 ist ein Filter 8, eine Pumpe 13 sowie eine Abzweigung 29 zu einer Rücklaufleitung 10 und ein Temperatursensor 12 vorgesehen. Die Rücklaufleitung 10 kann mit Hilfe eines Rücklaufventils 15 geöffnet und verschlossen werden. Der Injektor 28, die Pumpe 13 und das Rücklaufventil 15 werden von dem Steuergerät 14 gesteuert. Der Injektor 28 ist daher steuerbar bzw. ansteuerbar und nicht ausschließlich selbstöffnend. Im Steuergerät 14 ist eine Zeitsteuerung 6 sowie ein Massenstromaddierer 25 implementiert. Als Daten kann das Steuergerät 14 gegebenenfalls Daten von dem Temperatursensor 12 sowie Daten über den Füllstand 7 an Reduktionsmittel im Reduktionsmitteltank 2 verarbeiten. Außerdem können Daten von der Pumpe 13, dem Rücklaufventil 15 und/oder dem Injektor 28 bereit stehen. Aus diesen Daten kann eine geeignete Dosierungsstrategie von Reduktionsmittel in die Abgasbehandlungsvorrichtung 3 berechnet werden. Darüber hinaus kann auf Basis dieser Daten das erfindungsgemäße Verfahren zur Entlüftung durchgeführt werden.

Fig. 2 zeigt ein Diagramm des Betriebes des erfindungsgemäßen Verfahrens mit einer Zeitsteuerung. Im Diagramm ist die Zeitachse 18 dargestellt. Entlang der Zeitachse 18 erfolgt zu verschiedenen Zeitpunkten 17 jeweils ein Entlüftungsvorgang 22. Der zeitliche Abstand zwischen den einzelnen Entlüftungsvorgängen 22 ist mit dem Zeitintervall 16 vorgegeben. Das Zeitintervall 16 ist in dem ersten Zeitraum 19 anders eingestellt als in dem zweiten Zeitraum 20. Zum Zeitintervall 16 werden jeweils nur Phasen des Betriebes 23 des Kraftfahrzeuges bzw. der Verbrennungskraftmaschine hinzugezählt. In Fig. 2 ist beispielhaft ein dritter Zeitraum 21 dargestellt, der nicht zu einem Zeitintervall 16 dazugezählt wird. Dies kann beispielsweise eine Stillstandsphase eines Kraftfahrzeuges sein. Zusätzlich dargestellt ist in Fig. 2 ein besonderes Ereignis 24, an welchem ein Entlüftungsvorgang 22 unabhängig davon, ob das Zeitintervall 16 abgelaufen ist oder nicht, ausgelöst wird.

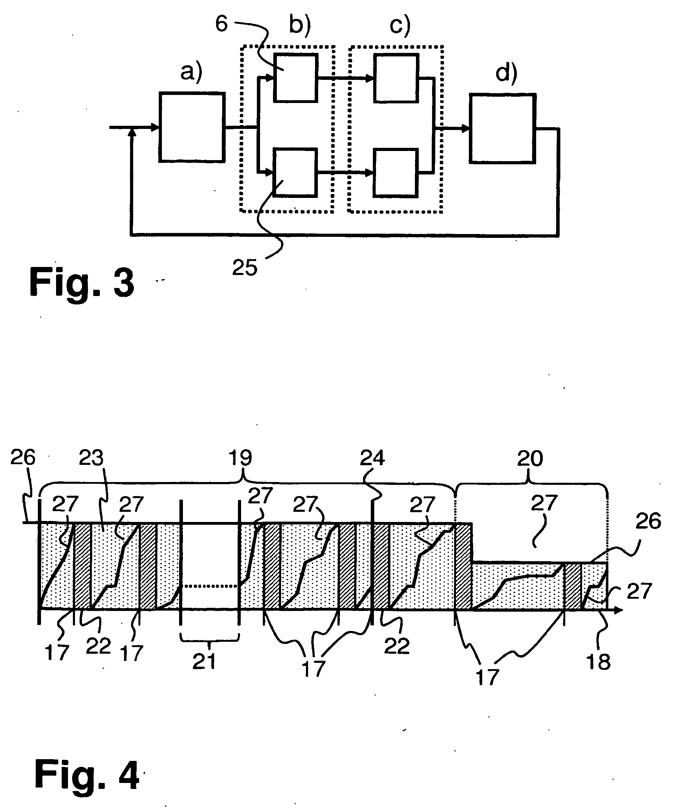

Fig. 3 zeigt ein Flussdiagramm des erfindungsgemäßen Verfahrens. Hier sind die Schritte a), b), c) und d) des erfindungsgemäßen Verfahrens dargestellt, welche in Form einer (iterativen) Schleife während des Betriebes der Verbrennungskraftmaschine regelmäßig wiederholt werden. Zu erkennen ist auch, dass die Schritte b) und c) jeweils zwei verschiedene Ausführungsformen beinhalten. In der oberen Ausführungsform kommt die Zeitsteuerung 6 zum Einsatz, während in der unteren Ausführungsform der Massenstromaddierer 25 eingesetzt wird.

Fig. 4 zeigt ein weiteres Diagramm des Betriebes des erfindungsgemäßen Verfahrens, bei welchem ein Massenstromaddierer zum Einsatz kommt. Auch in diesem Diagramm ist erkennbar, dass über der Zeitachse 18 zu verschiedenen Zeitpunkten 17 die Einleitung eines Entlüftungsvorganges 22 erfolgt. Die Zeitpunkte 17 werden hierbei immer dann ausgelöst, wenn der Massenstrom 27. einen Gesamtmassenstrom 26 erreicht. Der Gesamtmassenstrom 26 kann unterschiedlich festgelegt sein. Fig. 4 zeigt beispielhaft einen ersten Zeitraum 19 und einen zweiten Zeitraum 20, in denen der Gesamtmassenstrom 26 jeweils unterschiedlich festgelegt ist. Auch zu erkennen ist ein dritter Zeitraum 21, in welchem kein Betrieb 23 eines Kraftfahrzeuges bzw. einer Verbrennungskraftmaschine erfolgt. In diesem Zeitraum ergibt sich auch kein Anstieg des Massenstromes 27, so dass bei Einsatz eines Massenstromaddierers ein derartiger dritter Zeitraum 21 keine besondere Berücksichtigung finden muss. Außerdem dargestellt ist in der Fig. 4 ein Ereignis 24, bei welchem ein Entlüftungsvorgang 22 ausgelöst wird, obwohl der Gesamtmassenstrom 26 noch nicht erreicht ist.

Das erfindungsgemäße Verfahren ermöglicht den besonders zuverlässigen Betrieb einer Fördervorrichtung für ein Reduktionsmittel, bei welchem eine Abgasbehandlungsvorrichtung besonders zuverlässig mit Reduktionsmittel in der benötigten Menge versorgt wird. Durch das erfindungsgemäße Verfahren ist es sogar möglich, in einer Fördervorrichtung für Reduktionsmittel auf den Drucksensor zu verzichten. Hierdurch wird eine besonders kostengünstige ebenfalls erfindungsgemäße Fördervorrichtung für Reduktionsmittel ermöglicht.

### Bezugszeichenliste

- 1: Fördervorrichtung
- 2: Reduktionsmitteltank
- 3: Abgasbehandlungsvorrichtung
- 4: Verbrennungskraftmaschine
- 5: Kraftfahrzeug
- 6: Zeitsteuerung
- 7: Füllstand
- 8: Filter
- 9: Förderleitung
- 10: Rücklaufleitung
- 11: Speicherkapazität
- 12: Temperatursensor
- 13: Pumpe
- 14: Steuergerät
- 15: Rücklaufventil
- 16: Zeitintervall
- 17: Zeitpunkt
- 18: Zeitachse
- 19: erster Zeitraum
- 20: zweiter Zeitraum
- 21: dritter Zeitraum
- 22: Entlüftungsvorgang
- 23: Phase des Betriebes
- 24: Ereignis
- 25: Massenstromaddierer
- 26: Gesamtmassenstrom
- 27: Massenstrom
- 28: Injektor
- 29: Abzweigung
- 30: SCR-Katalysator

## Patentansprüche

1. Verfahren zum Betrieb einer Fördervorrichtung (1) zur Förderung eines Reduktionsmittels aus einem Reduktionsmitteltank (2) in eine Abgasbehandlungsvorrichtung (3) einer Verbrennungskraftmaschine (4) eines Kraftfahrzeuges (5), wobei während des Betriebs der Verbrennungskraftmaschine (4) zumindest zeitweise ein Entlüftungsvorgang (22) der Fördervorrichtung (1) erfolgt, wobei zumindest die folgenden Schritte ausgeführt werden:
a) Registrieren eines Entlüftungsvorganges (22);
b) Aktivieren einer Zeitsteuerung (6), mit einem voreingestellten Zeitintervall (16) und/oder Aktivieren eines Massenstromaddierers (25) mit einem voreingestellten Gesamtmassenstrom (26);
c) Abwarten des voreingestellten Zeitintervalls (16) und/oder Warten bis der voreingestellte Gesamtmassenstrom (26) erreicht ist; und
d) Durchführen eines Entlüftungsvorganges (22);

2. Verfahren nach Patentanspruch 1, wobei zumindest ein zusätzlicher Entlüftungsvorgang (22) durchgeführt wird, wenn zumindest eines der folgenden Ereignisse (24) auftritt:
- Auftreten eines vorbestimmten Fahrzustands des Kraftfahrzeuges (5);
- Auftreten eines vorbestimmten Füllstandes (7) und/oder einer vorbestimmten Füllstandsänderung im Reduktionsmitteltank (2);
- Erstinbetriebnahme der Fördervorrichtung (1);
- Beginn des Betriebs der Verbrennungskraftmaschine (4);
- Wechsel eines Filters (8) oder einer sonstigen Komponente der Fördervorrichtung (1); und
- Auftauen von eingefrorenem Reduktionsmittel im Reduktionsmitteltank (2) und/oder in der Fördervorrichtung (1).

3. Verfahren nach Patentanspruch 1 oder 2, wobei die Fördervorrichtung (1) eine vom Reduktionsmitteltank (2) zur Abgasbehandlungsvorrichtung (3) verlaufende Förderleitung (9) und eine von der Förderleitung (9) abzweigende und in den Reduktionsmitteltank (2) einmündende Rücklaufleitung (10) aufweist, wobei während des Entlüftungsvorgangs (22) der Fördervorrichtung (1) eine Kreisförderung von Reduktionsmittel durch die Förderleitung (9) und die Rücklaufleitung (10) erfolgt.

4. Verfahren nach einem der vorhergehenden Patentansprüche, wobei das Zeitintervall (16) und/oder der Gesamtmassenstrom (26) in Abhängigkeit von zumindest einem der folgenden Parameter variiert wird:
- Füllstand (7) im Reduktionsmitteltank (2);
- Temperatur des Reduktionsmittels;
- Massenstrom pro Zeiteinheit an Reduktionsmittel, welcher der Abgasbehandlungsvorrichtung (3) zugeführt wird;
- Geschwindigkeit des Kraftfahrzeuges (5);
- Drehzahl der Verbrennungskraftmaschine (4) des Kraftfahrzeuges (5); und
- Außentemperatur.

5. Verfahren nach einem der Patentansprüche 3 oder 4, wobei zu einem Zeitintervall (16) lediglich Phasen während des Betriebes der Verbrennungskraftmaschine (4) gezählt werden.

6. Verfahren nach einem der Patentansprüche 3 bis 5, wobei ein Zeitintervall (16) zumindest 5 min [Minuten] und maximal 2 Stunden beträgt.

7. Verfahren nach einem der Patentansprüche 3 bis 6, wobei ein Gesamtmassenstrom (26) zumindest 100 ml [Milliliter] und maximal 2 l [Liter] beträgt.

8. Verfahren nach einem der vorhergehenden Patentansprüche, wobei die Abgasbehandlungsvorrichtung (3) eine Speicherkapazität (11) für Reduktionsmittel aufweist und vor dem Entlüftungsvorgang (22) eine erhöhte Menge an Reduktionsmittel gefördert wird, um die Speicherkapazität (11) mit Reduktionsmittel zu befüllen.

9. Verfahren nach einem der vorhergehenden Patentansprüche, wobei die Förderung von Reduktionsmittel unterbrochen wird, während ein Entlüftungsvorgang (22) der Fördervorrichtung (1) erfolgt.

10. Fördervorrichtung (1) für ein Reduktionsmittel aus einem Reduktionsmitteltank (2) in eine Abgasbehandlungsvorrichtung (3), aufweisend eine Förderleitung (9), die vom Reduktionsmitteltank (2) zur Abgasbehandlungsvorrichtung (3) verläuft, sowie eine Pumpe (13) zur Förderung des Reduktionsmittels, wobei innerhalb der Fördervorrichtung (1) kein Drucksensor vorgesehen ist; und wobei die Fördervorrichtung (1) mit Mitteln zur Durchführung des Verfahrens gemäß einem der vorhergehenden Patentansprüche eingerichtet ist.

## Claims

1. Method for operating a delivery device (1) for delivering a reducing agent from a reducing agent tank (2) into an exhaust-gas treatment device (3) of an internal combustion engine (4) of a motor vehicle (5), wherein during the operation of the internal combustion engine (4), a ventilation process (22) of the delivery device (1) takes place at least intermittently, wherein at least the following steps are carried out:
a) registering a ventilation process (22);
b) activating a timing unit (6) with a preset time interval (16) and/or activating a mass flow summing unit (25) with a preset total mass flow (26);
c) waiting for the present time interval (16) to elapse and/or waiting until the preset total mass flow (26) is reached; and
d) carrying out a ventilation process (22).

2. Method according to Patent Claim 1, wherein at least one additional ventilation process (22) is carried out if at least one of the following events (24) takes place:
- occurrence of a predetermined driving state of the motor vehicle (5);
- occurrence of a predetermined fill level (7) and/or a predetermined fill level change in the reducing agent tank (2);
- initial start-up of the delivery device (1);
- start of operation of the internal combustion engine (4) ;
- exchange of a filter (8) or of another component of the delivery device (1); and
- thawing of frozen reducing agent in the reducing agent tank (2) and/or in the delivery device (1).

3. Method according to Patent Claim 1 or 2, wherein the delivery device (1) has a delivery line (9), which runs from the reducing agent tank (2) to the exhaust-gas treatment device (3), and has a return line (10) which branches off from the delivery line (9) and opens into the reducing agent tank (2), wherein during the ventilation process (22) of the delivery device (1), reducing agent is circulated through the delivery line (9) and the return line (10).

4. Method according to one of the preceding patent claims, wherein the time interval (16) and/or the overall mass flow (26) is varied as a function of at least one of the following parameters:
- fill level (7) in the reducing agent tank (2);
- temperature of the reducing agent;
- mass flow per unit time of reducing agent supplied to the exhaust-gas treatment device (3);
- speed of the motor vehicle (5);
- rotational speed of the internal combustion engine (4) of the motor vehicle (5); and
- outside temperature.

5. Method according to either of Patent Claims 3 and 4, wherein only phases during the operation of the internal combustion engine (4) are counted towards a time interval (16).

6. Method according to one of Patent Claims 3 to 5, wherein a time interval (16) lasts at least 5 min [minutes] and at most 2 hours.

7. Method according to one of Patent Claims 3 to 6, wherein a total mass flow (26) amounts to at least 100 ml [millilitres] and at most 2 1 [litres].

8. Method according to one of the preceding patent claims, wherein the exhaust-gas treatment device (3) has a storage capacity (11) for reducing agent and, before the ventilation process (22), an increased quantity of reducing agent is delivered in order to fill the storage capacity (11) with reducing agent.

9. Method according to one of the preceding patent claims, wherein the delivery of reducing agent is interrupted while a ventilation process (22) of the delivery device (1) is taking place.

10. Delivery device (1) for delivering a reducing agent from a reducing agent tank (2) into an exhaust-gas treatment device (3), having a delivery line (9) which runs from the reducing agent tank (2) to the exhaust-gas treatment device (3) and having a pump (13) for delivering the reducing agent, wherein no pressure sensor is provided within the delivery device (1), wherein the delivery device (1) is set up with means for carrying out the method according to one of the preceding patent claims.

## Revendications

1. Procédé pour faire fonctionner un dispositif (1) d'acheminement d'un agent réducteur d'un réservoir (2) d'agent réducteur à un dispositif (3) de traitement des gaz d'échappement d'un moteur (4) à combustion interne d'un véhicule (5) automobile, dans lequel, pendant le fonctionnement du moteur (4) à combustion interne, on effectue au moins de temps en temps une opération (22) de purge du dispositif (1) d'acheminement, dans lequel on effectue au moins les stades suivants :
a) enregistrement d'une opération (22) de purge ;
b) activation d'une commande (6) temporelle, ayant un intervalle (16) de temps réglé à l'avance et/ou activation d'un additionneur (25) de courant massique ayant un courant massique total réglé à l'avance ;
c) attendre que s'écoule l'intervalle (16) de temps réglé à l'avance et/ou attendre jusqu'à ce que le courant (26) massique total réglé à l'avance soit atteint et
d) exécution d'une opération (22) de purge.

2. Procédé suivant la revendication 1, dans lequel on effectue au moins une opération (22) de purge supplémentaire s'il se produit au moins l'un des événements (24) suivants :
- apparition d'un état de marche défini à l'avance du véhicule (5) automobile ;
- apparition d'un niveau (7) défini à l'avance et/ou une variation de niveau défini à l'avance dans le réservoir (2) d'agent réducteur ;
- première mise en service du dispositif (1) d'acheminement ;
- début du fonctionnement du moteur (2) à combustion interne ;
- changement d'un filtre (8) ou d'un autre élément du dispositif (1) d'acheminement et
- décongélation d'agent réducteur gelé dans le réservoir (2) d'agent réducteur et/ou dans le dispositif (1) d'acheminement.

3. Procédé suivant la revendication 1 ou 2, dans lequel le dispositif (1) d'acheminement a un conduit (9) d'acheminement allant du réservoir (2) d'agent réducteur au dispositif (3) de traitement des gaz d'échappement et un conduit (10) de retour, bifurquant du conduit (9) d'acheminement et débouchant dans la cuve (2) d'agent réducteur, dans lequel, pendant l'opération (22) de purge du dispositif (1) d'acheminement, il s'effectue un acheminement en circuit de l'agent réducteur dans le conduit (9) d'acheminement et dans le conduit (10) de retour.

4. Procédé suivant l'une des revendications précédentes, dans lequel on fait varier l'intervalle (16) de temps et/ou le courant (26) massique total en fonction d'au moins l'un des paramètres suivants :
- niveau (7) dans le réservoir (2) d'agent réducteur ;
- température de l'agent réducteur ;
- courant massique par unité de temps de l'agent réducteur, qui est envoyé au dispositif (3) de traitement des gaz d'échappement ;
- vitesse du véhicule (5) automobile ;
- régime du moteur (4) à combustion interne du véhicule (5) automobile et
- température extérieure.

5. Procédé suivant l'une des revendications 3 ou 4, dans lequel à un intervalle (16) de temps, on compte simplement des phases pendant le fonctionnement du moteur (4) à combustion interne.

6. Procédé suivant l'une des revendications 3 à 5, dans lequel un intervalle (16) de temps est d'au moins 5 min [minutes] et au maximum de 2 heures.

7. Procédé suivant l'une des revendications 3 à 6, dans lequel un courant (26) massique total est d'au moins 100 ml [millilitres] et au maximum de 2 1 [litres].

8. Procédé suivant l'une des revendications précédentes, dans lequel le dispositif (3) de traitement des gaz d'échappement a une capacité (11) d'accumulation de l'agent réducteur et, avant l'opération (22) de purge, on achemine une quantité plus grande d'agent réducteur pour remplir d'agent réducteur la capacité (11) d'accumulation.

9. Procédé suivant l'une des revendications précédentes, dans lequel on interrompt l'acheminement d'agent réducteur pendant que s'effectue une opération (22) de purge du dispositif (1) d'acheminement.

10. Dispositif (1) d'acheminement d'un agent réducteur d'un réservoir (2) d'agent réducteur à un dispositif (3) de traitement des gaz d'échappement, comprenant un conduit (9) d'acheminement, qui va du réservoir (2) d'agent réducteur au dispositif (3) de traitement des gaz d'échappement, ainsi qu'une pompe (13) d'acheminement de l'agent réducteur, dans lequel il n'est pas prévu de capteur de pression à l'intérieur du dispositif (1) d'acheminement et dans lequel le dispositif (1) d'acheminement est équipe de moyens pour effectuer le procédé suivant l'une des revendications précédentes.
